# EUROPEAN PATENT SPECIFICATION

(11) **EP 0 767 183 B1**
(45) Date of publication and mention of the grant of the patent: **18.11.1998**
(21) Application number: 96115099.2
(22) Date of filing: 20.09.1996
(51) Int. Cl.: C08F 10/00, C08F 4/654

(54) **Supported catalyst for olefin polymerization**
Trägerkatalysator für die Olefinpolymerisation
Catalyseur de polymérisation d'oléfines sur support

(30) Priority: 02.10.1995 EP 95115517
(43) Date of publication of application: 09.04.1997
(73) Proprietor: PCD Polymere AG, 2323 Schwechat-Mannswörth (AT)
(72) Inventor: Luciani, Luciano, Dr., 44100 Ferrara (IT); Wenidoppler, Birgit, 4713 Gallspach (AT); Neissl, Wolfgang, Dr., 4040 Lichtenberg (AT)
(74) Representative: Kunz, Ekkehard, Dr.

(56) References cited:
- EP-A- 0 101 978
- EP-A- 0 446 989
- EP-A- 0 595 574
- WO-A-93/13141

## Description

The present invention relates to a procedure for producing a solid catalyst component for polymerizing α-olefins alone or in mixture.

α-Olefins such as propylene and higher olefine monomers can be polymerized using Ziegler-Natta-catalysts based on an organometallic compound of elements of groups IA to IIIA and a compound of a transition metal belonging to groups IVA to VIA of the periodic table. Definition on Ziegler-Natta-catalysts can be found in literature, e. g. in the book: Boor Jr, Ziegler-Natta-catalysts and Polymerisation, Academic Press. New York, 1979. Highly active and highly stereospecific catalysts in the polymerisation of α-olefins, particularly propylene, are described in many patents, e. g. in British Pat. 1,387,890, where the use of trialkyl-Al (partially complexed with an electron donor compound) and the product obtained by grinding a mixture of a Mg-dihalide, an electron donor compound and a halogenated Ti-compound are provided.

More recently other patents like US 4,226,741 and US 4,673,661 show new ways for improving the performance and the preparation of the catalyst of the above mentioned patent. In US 5,310,716, the utilisation of inorganic carriers as supports (besides the use of Mg-dihalide) has been proposed .

In US 5,006,620 (among others), the use of inorganic carriers (supports) in presence of Mg-alkyls has been described. According to this patent, a catalyst-component for the polymerisation of olefins is obtained by treating a silica in suspension with an organic Mg-compound, a gaseous chlorinating agent selected from chlorine and hydrochloric acid, a derivative of phthalic acid, a C_{1 - 8} alkanol and Ti-tetrachloride.

Other proposals have been made in the art for improving the perfomance of catalytic systems. These proposals include modifications of the components of the catalytic systems by introducing further chemicals, e. g. typically Lewis bases, and using salts of a transition metal, in presence of a halide of a bivalent metal like Mg-dichloride, alone or additionally in presence of organic or inorganic carriers.

In the field of catalyst research it is still strongly desirable to find new catalyst components or catalyst systems with improved performance, especially with high activity and/or high stereoregularity.

According to the present invention, it has now been found that a particularly treated silica can interact in two steps with Mg-halide and Ti-alkoxide (or Ti-halogeno-alkoxide), and an organic Mg-alkyl compound and chlorinated hydrocarbons. It has also been found that the precursor, obtained as mentioned above and containing silica, Mg-halide or Mg-alkyl-halide and a Ti-compound, can interact with Ti-tetrahalide and with a Lewis base to give a solid catalyst-component which is highly active in the polymerisation of olefins to stereoregular polymers.

The present invention accordingly provides a process for the preparation of a solid catalyst component which is active in the polymerization of olefins, comprising the steps:
a) contacting a silylated silica support with a solution of Mg-halide or Mg-alkyl-halide or a mixture of both and Ti-alkoxyde or Ti-halogen-alkoxyde or a mixture of both, optionally in the presence of Ti-tetrahalide,
b) contacting the catalyst-precursor obtained in (a) with Mg-alkyl or Mg-alkyl-halide or a mixture of both, optionally in presence of electron-donors (Lewis bases),
c) halogenating the catalyst-precursor obtained in (b) by contact of said activated support with halogenating agents,
d) titanating the catalyst-precursor obtained in (c) with Ti-tetrahalide in the presence of electron-donors,
e) recovering the solid catalyst-component from the reaction products of step (d), where the added composition of step (a) is different from the added composition of step (b).

According to the present invention (concerning the preparation of an active solid component of a catalytic system, containing a silica carrier, a catalytic active part based on magnesium, halogen, titanium and Lewis bases and particularly qualified for polymerizing α-olefins alone or in mixture, especially propylene into stereoregular polymers) the procedure will preferably comprise:
1. A thermal treatment of a non activated silica to eliminate totally or partially hydroxyl groups and a chemical treatment with silylation reagents to replace active hydrogen in the compound with substituted silane groups.
2. Contacting of said silica with a solution of Mg-dihalide, Ti-alkoxyde (or Ti-halogen-alkoxyde) in a solvent, operating with a weight ratio between the Magnesium compound and silica of for instance 0,02 m to 10 g, and between the Titanium compound and silica of for instance 0,06 m to 10 g, at a temperature ranging from 15°C to the boiling point of the diluent, for the time necessary first to solubilize the solid salts of Mg and Ti, and then to almost completely deposite these compounds on the silica.
3. Contacting of the above composition, after removal of the diluent via distillation, with a solution in an inert hydrocarbon solvent of a Mg-dialkyl or Mg-halide-alkyl, operating with a weight ratio between Mg compound and silica of for instance 60 mM to 10 g, at a temperature from 15°C to the boiling point of the liquid phase for a period necessary to let deposit totally or partially the Magnesium compound on the silica.
   In this step, an amount of Lewis bases (electron donor) is preferably added to the hydrocarbon in a weight ratio between Lewis bases and silica for instance of 8,5 mM to 10 g.
4. Halogenation of the above composition by a treatment with halogenating agents especially selected e. g. from hydrocarbon halides, and operating in excess of this diluent at a temperature of -20°C to 120°C and for a period of 0,25 to 10 hours.
5. Treatment of the above obtained composition with an excess of Ti-tetrahalide either alone or in solution with hydrocarbon halides in presence of a Lewis base in a weight ratio between silica and Lewis base of e.g. 10g to 8,5 mM. The titanation of the precursor, halogenated as above described, is carried out preferably at temperatures from 80°C to 130°C for a period of 0,25 to 10 hours.
6. Recovery of the above obtained solid catalytic system after washing with hydrocarbon diluent and drying.

The first step of the preparation is dealing with silica treatments. The silica suitable as a carrier, is preferably microspheroidal and porous, with a particle size of 15 to 150 µm, with a surface area of 100 to 500 m²/g, a pore volume of 1,2 to 3,0 ml/g and an average pore diameter of 20 to 500 A (1A = 0.1 nm).
The silica has been thermically pretreated e.g. at 725°C for 8 hours reducing the content of hydroxylgroups from about 5 mM/g to about 0,5 mM/g and then treated with silylation reagents like e.g. hexamethyldisilane (HMS), trimethylchlorosilane (TMCS), hexamethyldisilazane (HMDS) or other silyldonor reagents. The silylation of silica is described e.g. in "Silicon Compounds, Register and Review, Petrarch System Silanes-Silicones, 1987 (Bartram RD Bristol, PA 19007) or in Ullmann's Encyclopedia of Industrial Chemistry, Vol. A 23, 5^{th}ed. 1993.
The content of hydroxylgroups in the silica after these treatments is preferably lower than 0,2 mM/g.

In the second step of the procedure according to the present invention, the silica, as treated above, is suspended in a solution of Mg-compounds and Ti-alkoxyde in a solvent e.g. ethylacetate.

The Magnesium compounds suitable for this purpose are those defined by the formulae MgX₂ or MgXR₁, where X represents a halogen atom, preferably chlorine, and R₁ an alkyl group, linear or branched, containing from 1 to 10 carbon atoms. Specific examples are Mg-dichloride, Mg-ethyl, or -propyl, or -butyl, or -hexylchloride.

The Ti-alkoxides suitable for this purpose are defined with the formulae Ti(OR)ₘXₙ, where (OR) are alkoxygroups, like ethoxy, propoxy, butoxy etc. groups and X a halogen atom, preferably chlorine. The ratio between m to n can move from 4 to 1 when n passes from 0 to 3. It is also possible to use mixtures of the above mentioned Ti-alkoxides with Ti-tetra-halide. Specific examples are Ti(OBu)₄; Ti(OBu)₃Cl; Ti(OBu)₂Cl₂; Ti(OBu)Cl₃, Ti(OProp)₄; Ti(OEt)₄.

Specific solvents for the above mentioned Mg- and Ti-salts are esters, like ethylacetate, ethylformiate; ketones, like acetone; alcohol, like ethylalcohol, butylalcohol, hexylalcohol, benzylalcohol, trichloroethylalcohol; amides, like acetamide, dimethylformamide, dimethylacetamide; organic acids, like benzoic acid, versatic acid, pelargonic acid, nonanoic acid. Preferably in this invention ethylacetate has been used.

The solution of Mg-halide, preferably Mg-dichloride, and of Ti-alkoxide, preferably Ti-tetrabutoxyde, is obtained at a temperature ranging from 15°C to the boiling point of the liquid phase, preferably from 50°C to refluxing temperature for a period of 0,5 to 4,0 hours, preferably of 2 to 3 hours. In a preferred embodiment, Mg-dihalide or Mg-alkyl-halide is dissolved in ethylacetate in the presence of Ti-tetrabutoxide or Ti-halide-alkoxide.

The silica support, treated as above mentioned is preferably added to the solution of Magnesium - and Titanium - salts permitting the deposition into the silica support in a time from 0,15 hours to 2,0 hours, preferably 0,5 hours to 1,0 hour at a temperature of 40°C to reflux temperature, preferably around or higher than 75°C.

Under the above conditions the Magnesium- and Titanium-salts are totally or partially absorbed into the silica.

The amount of Mg-dichloride used according to the present invention is of 10 to 30% w. referred to the silica, preferably of 15 to 25 % w. and of 1 to 3 g referred to 100 ml of ethylacetate, preferably from 1,5 to 2,5.
The amount of Ti-butoxide used according to the present invention is of 100 to 300 % w. referred to the silica, preferably of 150 to 250 % w. and of 10 to 30 ml referred to 100 ml of ethylacetate, preferably from 15 to 25 ml.

It has to be underlined that the use of Ti-tetra-chloride instead of Ti-alkoxide or Ti-halogen-alkoxide does not permit to achieve a good catalyst component (Comparative example D).

To complete this step, the liquid phase is removed by distillation, the solid matter washed with n-heptane and then with n-pentane, and finally dried.

In the third step, the precursor, obtained as above described, is added to a solution of a Mg-dialkyl or Mg-halogen-alkyl, preferably Mg-dihexyl diluted in n-heptane at 20 % w.

The Mg-dialkyl added to the total amount of precursor is of 30 to 90 mM referred to 10 g of silica, preferably of 50 to 70 mM.
Additionally, a donor was introduced into the solution, preferably diisobutylphthalate in an amount of 1,0 to 5,0 ml.
The resulting suspension is kept at a temperature ranging from 20 to 60°C, preferably from 30°C to 50°C, for a period of about 0,5 to 1,0 hour.

In the fourth step of the procedure according to the present invention, the suspension heated as above described is put in contact and interacted with one or more halogenating agents selected from halogenated hydrocarbons, like n-butylchloride, chloroform, trichloroethane, dichloroethane, dichloromethane, SiCl₄, SnCl₄, HCl, Cl₂, etc. Among these, a mixture of n-butylchloride and chloroform is preferred. The ratio between chloroform and n-butyl-chloride is optional, preferred is the value of about 2 to 1 in volume.
The amount of halogenating agent can be of 1000 ml for an amount of 50 to 100 g of solid matter (precursor), preferably of 65 to 75 g.

The time necessary for halogenating the Mg-alkyl and the Ti-alkoxide varies from 1 h to 3 h, preferably from 1,5 h to 2,5 h, the temperature from 40°C to the boiling point of the diluent, preferably from 60°C to reflux temperature.
It is further preferred, to contact the catalyst precursor with, e.g., di-iso-butyl-phthalate as a donor or Lewis base before the halogenating step.
At the end of the halogenating treatment, the solid is separated from the suspension, for example by sedimentation and syphoning, filtration or centrifugation, and washed with a solvent, such as a liquid aliphatic hydrocarbon solvent, and dried.

In the fifth step of the procedure, according to the present invention, the halogenated precursor of the fourth step is submitted to titanation. Thereby it is preferred to submit the solid catalyst component obtained in step 4 to one or more treatments with Ti-tetrachloride, concentrated or diluted in aliphatic or aromatic hydrocarbons, in presence of a Lewis base.

More specifically, the procedure is carried out with an excess of Ti-tetrahalide, preferably of Ti-tetrachloride by suspending the precursor obtained as above mentioned.

The operating temperature varies from 70°C to 135°C, preferably from 90°C to 120°C for a period from 0,5 to 4,0 hours, preferably from 1 hour to 3 hours. According to the present invention a Lewis base, like diisobutylphathalte, is added to Ti-tetrahalide in a preferred amount of 2,0 to 3,0 ml referred to 10 g of Silica used for the preparation.

Lewis bases can be, e. g., esters, ethers, amines, alkoholates, amides, preferably diisobutylphthalate.

After removing the overnatant Ti-tetrahalide, the Ti-tetrahalide treatment is repeated preferably twice, and finally, before recovering the solid catalyst component, the precursor is submitted to treatments with a liquid aliphatic hydrocarbon to dissolve and remove traces of Ti-tetrahalide, and dried.

The invention further concerns a solid catalyst component for the polymerization of olefins, obtained by the reaction steps:
a) contacting a silylated silica support with a solution of Mg-halide or Mg-alkyl-halide or a mixture of both and Ti-alkoxyde or Ti-halogen-alkoxyde or a mixture of both, optionally in the presence of Ti-tetrahalide,
b) contacting the catalyst-precursor obtained in (a) with Mg-alkyl or Mg-alkyl-halide or a mixture of both, optionally in the presence of electron-donors (Lewis bases),
c) halogenating the catalyst-precursor obtained in (b) by contact of said activated support with halogenating agents,
d) titanating the catalyst-precursor obtained in (c) with Ti-tetrahalide in the presence of an electron-donor compound,
e) recovering the solid catalyst-component from the reaction products of step (d).

According to the present invention, the solid catalyst component shows preferably this composition:

| | | | | |
|---|---|---|---|---|
| - Silica support | | 27 - 87.5 % w. | esp. | 55 - 65 % w. |
| - Catalytic active part: | Mg | 2 - 10 % w | esp. | 5.0 - 9.0 % w. |
| | Cl | 9 - 47 % w | esp. | 24 - 28 % w. |
| | Ti | 1.0 - 6 % w | esp. | 1.5 - 4 % w. |
| | Lewis base | 0.5 - 10 % w | esp. | 1.0 - 6 % w. |

wherein the Titanium is almost completely in its tetravalent form.

It has now been found, according to the present invention, that useful results are not obtained when totally avoiding the use of one of the so called second (addition of a solution of Mg-halide and Ti-alkoholate) or third (addition of Mg-alkyl, Lewis base and chlorinating agents) step as shown in the comparative examples A and B.

Moreover, bad results are achieved if the order of step 1 and 2 is inverted, that is if the first step is: Mg-alkyl plus a halogenating agent and the second step: Ti-alkoxide or Ti-halogeno-alkoxide plus Mg-di-chloride and ethylacetate (Comparative example C).

The present invention relates moreover to a catalyst for the stereospecific polymerisation of α-olefins, which contains: A-a solid catalyst-component as described above; B-Aluminiumtrialkyl or -haloalkyl, preferably Al-trialkyl or Al-chloroalkyl; Can electron donor, preferably selected from alkoxy-silane derivatives.

The solid catalyst component or the catalyst as described above can be advantageously used in bulk, slurry or gas phase processes for the preparation of polyolefins by homopolymerization or copolymerization with two or more monomers. The catalyst can be used also in the polymerization of ethylene as it is or omitting internal and external donors.

The present invention further relates to a process for the preparation of polyolefins by homopolymerization or copolymerization of olefins, wherein a solid catalyst component or catalyst as described above is used. The polymerisation is conducted according to conventional methods, operating in a liquid phase, either in the presence or in the absence of an inert hydrocarbon diluent, or in gas phase.

The catalyst of the invention can be used also at higher temperatures, whereby the polymerization is preferably carried out at a temperature of about 20° to 150°C, more preferred between 70°C and 120°C, at atmospheric pressure or at a higher pressure, in absence or in presence of hydrogen.

The catalyst of the present invention is highly active and highly selective, permitting to achieve very low values of extractable amorphous resins in boiling n-heptane and xylene.

Many other α-olefins can also be polymerised using this catalyst, like butene-1, 4-methyl-1-penten, hexene-1, alone or in mixture with other α-olefins for obtaining copolymers and terpolymers, mainly of rubber type.

The use of this catalyst permits moreover to obtain controlled polymer particle size of the desired dimension on the basis of the choice of the selected silica.

Moreover, the catalyst according to the invention shows an outstanding response to hydrogen, permitting to obtain high melt flow (MFI), and also to increase dramatically the yield.

Finally, this catalyst produces polypropylene resin at very high level of crystallinity due to the high selectivity and high stereoregularity.

### Example 1

10 g of microspheroidal silica, silylated grade, as described above and silylated with hexamethyldisilane (HMS), with a surface area of 225 m²/g, pore volume of 1,22 ml/g, and particles diameter of 49 µm, are introduced into a flask containing a solution of 2,0 g of α-Mg-dichloride, 20 ml of Ti-tetrabutoxide in 150 ml of ethylacetate.
The slurry is left to contact under stirring for 0,5 hours at the boiling point of the diluent.
The solid is recovered by evaporating the solvent and washed twice with 200 ml of n-heptane and twice with 200 ml of n-pentane. The hydrocarbon diluents are removed and the precursor dried.
60 mM of Mg di-hexyle diluted with n-heptane (20 % V) and 2,4 ml of di-iso-butyl-phthalate are added to the solid matter, stirring for 45 minutes at 40°C.
A solution of 100 ml of chloroform and 40 ml of n-butylchloride are introduced into the flask and reacted for 2 hours at 70°C, still under stirring, then the liquid is siphoned and the precursor washed and dried. 60 ml of Ti-tetrachloride are added at room temperature to the thus obtained solid, and the suspension is slowly heated to 90°C. When the temperature has reached the mentioned value, 2,3 ml of Diisobutylphthalate are added dropwise while increasing the temperature to 110°C under stirring. After filtering at 110°C, the same treatment with Ti-tetrachloride without diisobutylphthalate is carried out twice.
The liquid is finally syphoned at 110°C and the solid matter washed 5 times with 200 ml of n-heptane at 85 °C for 0,5 hours each time.
After twice washing treatment with n-pentane at room temperature, the catalyst is dried.
16.6 g of a violet solid component were obtained, containing 23,9 % w of Cl, 6,03 % w of Mg and 2,4 % w of Ti.
The activity and stereospecifity of this solid catalyst component were determined in runs of propylene polymerisation in liquid monomer, using as a cocatalyst Aluminiumtrialkyls treated with electron-donor compounds.
An autoclave of 5 liters equipped with a magnetic stirrer was used. The polymerisation temperature was 85°C, the amount of propylene 2000 ml and the time two hours. Hydrogen (2500 ml) was present as molecular weigth modifier.

An amount ot about 80mg of solid catalyst component was charged into the autoclave using as a co-catalyst an amount of Al-triethyl corresponding to an Al/Ti molar ratio (m.r.) of 100 and an electron donor (D=dicyclopentyldimethoxysilan) corresponding to an Al/D m.r. = 20.
At the conclusion of the polymerisation, the remaining propylene was flashed out and the polymer was then dried in nitrogen atmosphere at about 70°C. A yield equal to 6,17 kg PP per gram of solid component of catalyst and to 257 kg PP per gram of Titanium were obtained with the following characteristics:

| | |
|---|---|
| MFI (2.16 kg; 230°C ASTM D1238 L) = | 0,25 |
| Bulk density ...... g/ml = | 0,467 |
| Isotactic index = | 99,3 |
| Xylene soluble % w = | 2,56 |

¹³C-NMR spectra were recorded on an AM 250 Bruker spectrometer operating in FT mode at 62,89 M.Hz and 39 K in inverse Gated mode of decoupling with a relaxation delay of 7 sec, finding a value of 0,97₄ in "mmmm" pentads composition in the polypropylene powder.

The polymerization test run was repeated at an Al/D m.r = 40, achieving a yield equal to 7,32 kg PP per g of solid component of catalyst and to 305 kg PP per gram of Titanium, with the following characteristics:

| | |
|---|---|
| MFI (2.16 kg : 230°C ASTM D 1238 L) = | 0,41 |
| Bulk density ...... g/ml = | 0,450 |
| Isotactic index = | 98,5 |
| Xylene soluble % = | 2,71 |

### Example 2:

A solid catalyst component was prepared following the procedure described in example 1 with only one change. Instead of using a solution of α-MgCl₂ and Ti-tetrabutoxyde in ethylacetate, a different composition has been applied:
2 g of αMgCl₂, 10 ml of Ti-tetrabutoxyde and 3,2 ml of Ti-tetrachloride were dissolved in 150 ml of ethylacetate. Treatments and procedures for every step were analogous to example 1.
15,02 g of grey-violet solid catalyst component were obtained, containing 24.7 % w of Cl, 7,04 % w of Mg and 1,72 % w of Ti.

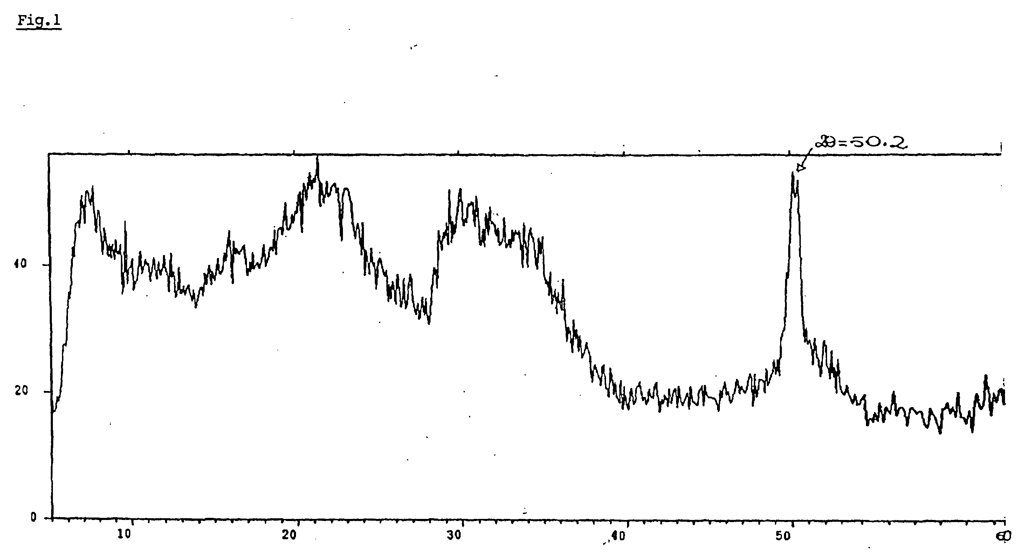

The XRD pattern (Fig. 1) of the catalyst shows only one really crystalline peak detected at 2 - Theta = 50,2° in correspondence to the 110 peak of α-MgCl₂. No other peaks of α-MgCl₂ are present, and this indicates a remarkable structural disorder in the Cl-Mg-Cl layers of MgCl₂, confirmed by the presence of a very broad peak at 2-Theta = 30 - 34°.
This is the peak having indexes 104, the main peak of α-MgCl₂, which is highly perturbed by disorder phenomena.
The absence of 003 peak (2-Theta = 15°) indicates the complete absence of the layer structure of MgCl₂.
The broad peak at 2-Theta = 20 - 22° can be associated to the amorphous support.
Finally, the peak at 2-Theta = 7 - 8°, even if not well defined, could indicate some intercalation phenomena.

After polymerizing at the same conditions as described in example 1 at an Al/D m.r = 20, a yield of 6,0 kg PP/g of solid catalyst component and of 350 kg PP/g Titanium were obtained with the following characteristics:

| | |
|---|---|
| MFI (2.16 kg; 230°C - ASTM D 1238L) = | 0.23 |
| Bulk density ...... g/ml = | 0.428 |
| Isotactic index = | 99.3 |
| Xylene soluble % w = | 2.17 |

The polymerization test run was repeated at Al/D m r 40 and with 3500 ml H₂, achieving a yield equal to 7,11 kg PP per g of solid component of catalyst and equal to 415 kg PP per g of Ti, with the following characteristics:

| | |
|---|---|
| MFI (2,16 kg; 230°C ASTM D 1238 L) = | 0.71 |
| Bulk density ... g/ml = | 0.434 |
| Isotactic indes = | 98.9 |
| Xylene soluble % w = | 2.56 |

### Example 3:

10 g of microspheroidal silica, silylated grade, as described in example 1 and with the same characteristics, are introduced into a flask containing a solution of 2,4 g of α-Mg-dichloride, 24 ml of Ti-tetrabutoxide, 4 ml of Ti-tetrachloride in 150 ml of ethylacetate.
The slurry is left to contact under stirring for 0,5 hours at the boiling point of the diluent. The solid is recovered by evaporating the solvent and washed twice with 200 ml of n-heptane and twice with 200 ml of n-pentane. The hydrocarbon diluents are removed and the precursor dried.
72 mM of Mg-dihexyl diluted with n-heptane (20 % v) and 2,7 ml of di-iso-butyl-phthalate are added to the solid matter, stirring for 1,5 h at 50°C. 170 ml of a solution of chloroform and n-butyl-chloride (100 : 40) is introduced into the flask and reacted for 3 h at about 70°C, still under stirring, then, the liquid is siphoned, the precursor washed and dried.
The catalyst preparation was completed after this step as described in example 1. 17,13 g of a grey solid component were obtained, containing 28,7 % w of Cl, 7,88 of Mg and 2,77 of Ti.
A polymerization test run was carried out at Al/D = 20 in presence of 10 000 ml of H2, mainly for verifying the response to the hydrogen.
A yield equal to 14.9 kg PP per g of solid component of catalyst and equal to 538 kg PP per g of Ti was achieved, with the following characteristics:

| | |
|---|---|
| MFI (2.16kg; 230°C ASTM D 1238L) = | 7.15 |
| Bulk density g/ml = | 0.399 |
| Isotactic index = | 98.7 |
| Xylene soluble % w = | 2.52 |

### Example 4:

A gas phase polymerization at 95°C for 3 hours was carried out at 30 bar of propylene, in presence of 3500 ml of hydrogen, using the catalyst as described in Example 1.
A yield equal to 5,83 kg PP per g of solid component of catalyst and equal to 339 kg PP per g of Ti was achieved with the following characteristics:

| | |
|---|---|
| MFI (2.16 kg; 230°C ASTM D 1238 L) = | 5,96 |
| Bulk density g/ml = | 0,353 |
| Isotactic index = | 98,3 |
| Xylene soluble % w = | 1,52 |

### Comparative example A:

A solid catalyst component was prepared following the procedure described in example 1, but avoiding the introduction of the solution of 2,0 g of α-MgCl₂, 20 ml of Ti-tetrabutoxide in 150 ml of ethylacetate.

More in detail, silica was directly treated with 60 mM of Mg-dihexyl diluted with n-heptane (20 % w) and 2,4 ml of diisobutylphthalate, stirring for 45 minutes at 40 °C.

Chlorination and titanation were carried out as described in example 1 with the difference that only half the amount of chlorinating agents were used.

14,66 g of green/grey solid component were obtained, containing 15,5 % w of Chlorine,1,88 % w of Magnesium and 3,61 % w of Titanium.

After polymerizing at the same conditions as described in example 1 at Al/D m . r = 20 and with 1250 ml H₂, a yield of 2 kg PP per gram of solid component of catalyst and of 56 kg PP per gram of Titanium where obtained with the following characteristics:

| | |
|---|---|
| MFI (2.16 kg; 230°C ASTM D 1238 L) = | 0,14 |
| Bulk density ...... g/ml = | 0,40 |
| Isotactic index = | 99,3 |
| Xylene soluble % w = | 1,09 |

### Comparative example B

A solid catalyst component was prepared following the procedure described in example 1, but avoiding the introduction of 60 mM of Mg-di-hexyl diluted with n-heptane, 2,4 ml of diisobutylphthalate and then the solution of chloroform and n-butylchloride.
More in detail, silica was directly treated with a solution of 2,0 g of α-Mg-dichloride, 20 ml of Ti-tetrabutoxide in 120 ml of ethylacetate, stirring for 0,5 hours at the boiling point of the diluent.
The preparation was then carried out as described in example 1, obtaining 9,59 g of white/beige solid component, containing 1,99 % w of Cl, 0,04 % w of Mg and 1,06 % w of Titanium.

After polymerising at the same conditions as described in example 1 at Al/D m.r = 20, a very poor yield was achieved. No characterizations were carried out.

### Comparative example C

A solid component of catalyst was prepared following the procedure described in example 1 with only a change.

Silylated silica has been treated first with the solution of Mg-alkyl and chlorinated hydrocarbons, and then with the solution of Mg-di-chloride plus Ti-tetra-butoxide in ethylacetate, maintaining fixed amounts and treatment conditions.
13,22 g of a beige solid component were obtained, containing 12,9 % w of chlorine, 1,22 % w of Mg and 3,22 w of Ti.

After polymerizing at the same conditions as described in example 1 at Al/D m r of 20, a yield equal to 1,79 kg PP per g of solid component of catalyst and equal to 55,4 kg PP per g of Ti were obtained, with the following characteristics:

| | |
|---|---|
| MFI (2.16 kg; 230°C ASTM D 1238 L) = | 0,58 |
| Bulk density g/ml = | 0,383 |
| Isotactic index = | 99,0 |
| Xylene soluble % w = | 2,57 |

### Comparative example D:

A solid component of catalyst was prepared following the procedure described in the example 1, only using the same molar amount of Ti-tetra-chloride instead of Ti-tetra-butoxide in the first impregnation step, without changes or other modifications of the conditions.
28,11 g of beige solid component were obtained, containing 33,20 % w of chlorine, 6,38 % w of Mg and 7.25 % w of Ti.

After polymerizing at the same conditions as described in example 1 at Al/D m r of 20 and with 3500 ml/H₂, a yield of 2,42 kg PP per g of solid component of catalyst and 33,4 kg PP per g of Ti were obtained with the following characteristics:

| | |
|---|---|
| MFI (2.16 kg; 230° ASTM D 1238 L) = | 2,16 |
| Bulk density g/ml = | 0,239 |
| Isotactic index = | 95,9 |
| Xylene soluble % w = | 5,96 |

## Claims

1. Procedure for the preparation of a solid catalyst component which is active in the polymerization of olefins, comprising the steps:
a) contacting a silylated silica support with a solution of Mg-halide or Mg-alkyl-halide or a mixture of both and Ti-alkoxyde or Ti-halogen-alkoxyde or a mixture of both, optionally in the presence of Ti-tetrahalide,
b) contacting the catalyst-precursor obtained in (a) with Mg-alkyl or Mg-alkyl-halide or a mixture of both, optionally in presence of electron-donors (Lewis bases),
c) halogenating the catalyst-precursor obtained in (b) by contact of said activated support with halogenating agents,
d) titanating the catalyst-precursor obtained in (c) with Ti-tetrahalide in the presence of electron-donors,
e) recovering the solid catalyst-component from the reaction products of step (d), where the added composition of step (a) is different from the added composition of step (b).

2. Procedure according to claim 1, wherein in step (a) microspheroidal silylated silica is used with a particle size of 15 to 150 micron, a surface area of 100 to 500 m²/g, a pore volume of 1,2 to 3,0 ml/g, containing a total amount of hydroxyl groups of lower than 0,2 mM/g.

3. Procedure according to claim 1 or 2, wherein in step (a) Mg-dihalide or Mg-alkyl-halide is dissolved in ethylacetate in presence of Ti-tetrabutoxide or Ti-halide-alkoxide.

4. Procedure according to any of claims 1 to 3, wherein the halogenating agents are chosen from the group consisting of chlorinated hydrocarbons.

5. Procedure according to any of claims 1 to 4, wherein a mixture of chloroform and butylchloride is used as halogenating agent.

6. Procedure according to any of claims 1 to 5, wherein in step (b) the catalyst precursor is optionally contacted with di-iso-butyl-phthalate.

7. Procedure according to any of claims 1 to 6, wherein the solid catalyst-component obtained in step (c) is submitted to one or more treatments with Ti-tetrachloride, concentrated or diluted in aliphatic of aromatic hydrocarbons, in presence of a Lewis base.

8. A solid catalyst component for the polymerization of olefins, obtained by the reaction steps:
a) contacting a silylated silica support with a solution of Mg-halide or Mg-alkyl-halide or a mixture of both and Ti-alkoxyde or Ti-halogen-alkoxyde or a mixture of both, optionally in the presence of Ti-tetrahalide,
b) contacting the catalyst-precursor obtained in (a) with Mg-alkyl or Mg-alkyl-halide or a mixture of both, optionally in presence of electron-donors (Lewis bases),
c) halogenating the catalyst-precursor obtained in (b) by contact of said activated support with halogenating agents,
d) titanating the catalyst-precursor obtained in (c) with Ti-tetrahalide in the presence of electron-donors,
e) recovering the solid catalyst-component from the reaction products of step (d), where the added composition of step (a) is different from the added composition of step (b).

9. A solid catalyst-component according to claim 8, containing 27 - 87.5 % w. silica, 2.0 - 10.0 % w. Mg, 9 - 47 % w. Cl, 1.0 - 6.0 % w. Ti and 0.5 - 10.0 % w. of a Lewis base.

10. Catalyst for the polymerization of olefins, which is based on a solid catalyst component as claimed in any of claims of 1 to 9, an Al-tri-alkyl or an Al-halogen-alkyl and a Lewis base, preferably selected from alkoxysilane derivatives.

11. Catalyst component or catalyst according to any of claims 1 to 10 for the polymerization of olefins, used for polymerizing in the temperature range from 20°C to 150°C, but specific for operating in the temperature range from 70°C to 120°C.

12. Use of a solid catalyst component or catalyst as claimed in any of claims 1 to 11 for the polymerization or copolymerization of olefins.

13. Process for the preparation of polyolefins by homopolymerization or copolymerization of olefins, wherein a solid catalyst component or catalyst as claimed in any of claims 1 to 11 is used.

## Patentansprüche

1. Verfahren zur Herstellung einer bei der Polymerisation von Olefinen aktiven festen Katalysatorkomponente, bei dem man:
a) einen silylierten Siliciumdioxidträger mit einer Lösung von Magnesiumhalogenid oder Alkylmagnesiumhalogenid oder einem Gemisch davon und Titanalkoholat oder Titanhalogenidalkoholat oder einem Gemisch davon gegebenenfalls in Gegenwart eines Titantetrahalogenids in Berührung bringt,
b) den in (a) erhaltenen Katalysatorvorläufer mit Magnesiumalkyl oder Alkylmagnesiumhalogenid oder einem Gemisch davon gegebenenfalls in Gegenwart von Elektronendonatoren (Lewis-Basen) in Berührung bringt,
c) den in (b) erhaltenen Katalysatorvorläufer durch Inberührungbringen des aktivierten Trägers mit Halogenierungsmitteln halogeniert,
d) den in (c) erhaltenen Katalysatorvorläufer mit Titantetrahalogenid in Gegenwart von Elektronendonatoren titaniert und
e) die feste Katalysatorkomponente aus den Reaktionsprodukten des Schritts (d) isoliert,
wobei die zugesetzte Zusammensetzung gemäß Schritt (a) von der zugesetzten Zusammensetzung gemäß Schritt (b) verschieden ist.

2. Verfahren nach Anspruch 1, bei dem man in Schritt (a) mikrokugelförmiges silyliertes Siliciumdioxid mit einer Korngröße von 15 bis 150 Mikron, einer Oberfläche von 100 bis 500 m²/g, einem Porenvolumen von 1,2 bis 3,0 ml/g und einem Gesamtgehalt an Hydroxylgruppen von weniger als 0,2 mM/g einsetzt.

3. Verfahren nach Anspruch 1 oder 2, bei dem man in Schritt (a) Magnesiumdihalogenid oder Alkylmagnesiumhalogenid in Gegenwart von Titantetrabutylat oder Titanhalogenidalkoholat in Essigsäureethylester löst.

4. Verfahren nach einem der Ansprüche 1 bis 3, bei dem man die Halogenierungsmittel aus der Gruppe der Chlorkohlenwasserstoffe auswählt.

5. Verfahren nach einem der Ansprüche 1 bis 4, bei dem man als Halogenierungsmittel eine Mischung aus Chloroform und Butylchlorid einsetzt.

6. Verfahren nach einem der Ansprüche 1 bis 5, bei dem man in Schritt (b) den Katalysatorvorläufer gegebenenfalls mit Diisobutylphthalat in Berührung bringt.

7. Verfahren nach einem der Ansprüche 1 bis 6, bei dem man die in Schritt (c) erhaltene feste Katalysatorkomponente ein- oder mehrmals in Gegenwart einer Lewis-Base mit konzentriertem oder in aliphatischen oder aromatischen Kohlenwasserstoffen verdünntem Titantetrachlorid behandelt.

8. Feste Katalysatorkomponente für die Polymerisation von Olefinen, die erhältlich ist, indem man:
a) einen silylierten Siliciumdioxidträger mit einer Lösung von Magnesiumhalogenid oder Alkylmagnesiumhalogenid oder einem Gemisch davon und Titanalkoholat oder Titanhalogenidalkoholat oder einem Gemisch davon gegebenenfalls in Gegenwart eines Titantetrahalogenids in Berührung bringt,
b) den in (a) erhaltenen Katalysatorvorläufer mit Magnesiumalkyl oder Alkylmagnesiumhalogenid oder einem Gemisch davon gegebenenfalls in Gegenwart von Elektronendonatoren (Lewis-Basen) in Berührung bringt,
c) den in (b) erhaltenen Katalysatorvorläufer durch Inberührungbringen des aktivierten Trägers mit Halogenierungsmitteln halogeniert,
d) den in (c) erhaltenen Katalysatorvorläufer mit Titantetrahalogenid in Gegenwart von Elektronendonatoren titaniert und
e) die feste Katalysatorkomponente aus den Reaktionsprodukten des Schritts (d) isoliert,
wobei die zugesetzte Zusammensetzung gemäß Schritt (a) von der zugesetzten Zusammensetzung gemäß Schritt (b) verschieden ist.

9. Feste Katalysatorkomponente nach Anspruch 8, enthaltend 27-87,5Gew.-% Siliciumdioxid, 2,0 - 10,0 Gew.-% Mg, 9 - 47 Gew.-% Cl, 1,0 - 6,0 Gew.-% Ti und 0,5 - 10 Gew.-% einer Lewis-Base.

10. Katalysator für die Polymerisation von Olefinen, basierend auf einer festen Katalysatorkomponente nach einem der Ansprüche 1 bis 9, einem Aluminiumtrialkyl oder einem Alkylaluminiumhalogenid und einer Lewis-Base, vorzugsweise ausgewählt unter Alkoxysilan-Derivaten.

11. Katalysatorkomponente bzw. Katalysator nach einem der Ansprüche 1 bis 10 für die Polymerisation von Olefinen, der zur Polymerisation im Temperaturbereich von 20°C bis 150°C, aber speziell im Temperaturbereich von 70°C bis 120°C eingesetzt wird.

12. Verwendung einer festen Katalysatorkomponente bzw. eines festen Katalysators nach einem der Ansprüche 1 bis 11 zur Polymerisation oder Copolymerisation von Olefinen.

13. Verfahren zur Herstellung von Polyolefinen durch Homo- oder Copolymerisation von Olefinen, bei dem man eine feste Katalysatorkomponente bzw. einen festen Katalysator nach einem der Ansprüche 1 bis 11 einsetzt.

## Revendications

1. Procédé de préparation d'un composant solide de catalyseur qui est actif pour la polymérisation d'oléfines, comprenant les étapes consistant à :
a) amener un support de silice silylée au contact d'une solution d'halogénure de Mg ou d'halogénure d'alkyl-Mg ou d'un mélange des deux et d'alcoolate de Ti ou d'un halogéno-alcoolate de Ti, ou d'un mélange des deux, éventuellement en présence d'un tétrahalogénure de Ti,
b) amener le précurseur de catalyseur obtenu en (a) au contact d'alkyl-Mg ou d'un halogénure d'alkyl-Mg ou d'un mélange des deux, éventuellement en présence de donneurs d'électrons (bases de Lewis),
c) halogéner le précurseur de catalyseur obtenu en (b) en l'amenant au contact dudit support activé avec des agents d'halogénation,
d) titaner le précurseur de catalyseur obtenu en (c) avec un tétrahalogénure de Ti en présence de donneurs d'électrons,
e) récupérer le composant solide de catalyseur à partir des produits de réaction de l'étape (d),
la composition additionnée de l'étape (a) étant différente de la composition additionnée de l'étape (b).

2. Procédé selon la revendication 1, dans lequel, dans l'étape (a), on utilise de la silice silylée sous la forme de microsphères, ayant une dimension de particules de 15 à 150 microns, une surface spécifique de 100 à 500 m²/g, un volume de pores de 1,2 à 3,0 ml/g, contenant une quantité totale de groupes hydroxyles inférieure à 0,2 mM/g.

3. Procédé selon la revendication 1 ou 2, dans lequel, dans l'étape (a), on dissout un dihalogénure de Mg ou un halogénure d'alkyl-Mg dans de l'acétate d'éthyle en présence de tétrabutylate de Ti ou d'un halogéno-alcoolate de Ti.

4. Procédé selon l'une quelconque des revendications 1 à 3, dans lequel les agents d'halogénation sont choisis dans l'ensemble constitué par des hydrocarbures chlorés.

5. Procédé selon l'une quelconque des revendications 1 à 4, dans lequel on utilise un mélange de chloroforme et de chlorure de butyle comme agent d'halogénation.

6. Procédé selon l'une quelconque des revendications 1 à 5, dans lequel, dans l'étape (b), le précurseur de catalyseur est éventuellement amené au contact de phtalate de diisobutyle.

7. Procédé selon l'une quelconque des revendications 1 à 6, dans lequel on soumet le composant solide de catalyseur obtenu dans l'étape (c) à un ou plusieurs traitements avec du tétrachlorure de Ti, concentré ou dilué dans des hydrocarbures aliphatiques ou aromatiques, en présence d'une base de Lewis.

8. Composant solide de catalyseur pour la polymérisation d'oléfines, obtenu au moyen des étapes de réaction consistant à :
a) amener un support de silice silylée au contact d'une solution d'halogénure de Mg ou d'halogénure d'alkyl-Mg ou d'un mélange des deux et d'alcoolate de Ti ou d'un halogéno-alcoolate de Ti, ou d'un mélange des deux, éventuellement en présence d'un tétrahalogénure de Ti,
b) amener le précurseur de catalyseur obtenu en (a) au contact d'alkyl-Mg ou d'un halogénure d'alkyl-Mg ou d'un mélange des deux, éventuellement en présence de donneurs d'électrons (bases de Lewis),
c) halogéner le précurseur de catalyseur obtenu en (b) en l'amenant au contact dudit support activé avec des agents d'halogénation,
d) titaner le précurseur de catalyseur obtenu en (c) avec un tétrahalogénure de Ti en présence de donneurs d'électrons,
e) récupérer le composant solide de catalyseur à partir des produits de réaction de l'étape (d),
la composition additionnée de l'étape (a) étant différente de la composition additionnée de l'étape (b).

9. Composant solide de catalyseur selon la revendication 8, contenant 27 à 87,5 % en poids de silice, 2,0 à 10,0 % en poids de Mg, 9 à 47 % en poids de CI, 1,0 à 6,0 % en poids de Ti et 0,5 à 10,0 % en poids d'une base de Lewis.

10. Catalyseur pour la polymérisation d'oléfines, à base d'un composant solide de catalyseur selon l'une quelconque des revendications 1 à 9, d'un trialkyl-Al ou d'un halogénoalkyl-Al et d'une base de Lewis choisie, de préférence, parmi des dérivés d'alcoxysilanes.

11. Composant de catalyseur ou catalyseur selon l'une quelconque des revendications 1 à 10 pour la polymérisation d'oléfines, qu'on utilise pour une polymérisation à des températures comprises entre 20°C et 150°C, mais spécifiquement pour une utilisation dans la plage de températures de 70°C à 120°C.

12. Utilisation d'un composant solide de catalyseur ou d'un catalyseur selon l'une quelconque des revendications 1 à 11 pour la polymérisation ou la copolymérisation d'oléfines.

13. Procédé de préparation de polyoléfines par homopolymérisation ou copolymérisation d'oléfines, dans lequel on utilise un composant solide de catalyseur ou un catalyseur selon l'une quelconque des revendications 1 à 11.
